# EUROPEAN PATENT APPLICATION

(11) **EP 3 153 308 A1**
(43) Date of publication of application: **12.04.2017**
(21) Application number: 15188840.1
(22) Date of filing: 07.10.2015
(51) Int. Cl.: B29C 70/38, B29C 31/08, B29C 43/34

(54) **COMPRESSION MOLDING APPARATUS**

(71) Applicant: Chaei Hsin Enterprise Co., Ltd., Taichung City (TW)
(72) Inventor: WANG, Shui Mu, Taichung City (TW)
(74) Representative: Cabinet Chaillot

(57) **Abstract**

A compression molding apparatus contains: a base (10), a carrying platform (20), at least one projector (30), a pressing mold (40), and a heater (50). The base (10) includes a material feeding zone (11) and a molding zone (12). The carrying platform (20) moves into the molding zone (12) from the material feeding zone (11), and when it is located in the material feeding zone (11), plural connecting pieces (70) are stacked on the carrying platform (20). The at least one projector (30) is fixed above the material feeding zone (11) to project plural positioning images (31) on the carrying platform (20), and each connecting piece (70) is stacked on the carrying platform (20) by aligning with each positioning image (31). The pressing mold (40) is arranged above the molding zone (12), and when the carrying platform (20) moves into the molding zone (12), the pressing mold (40) moves to press the each connecting piece (70) on the carrying platform (20). The heater (50) is mounted on the base (10) to heat the each connecting piece (70) on the carrying platform (20).

## Description

### FIELD OF THE INVENTION

The present invention relates to a compression molding apparatus in which at least one projector projects plural positioning images on a carrying platform so that each positioning image is adapted for fixing each of the plural connecting pieces on a carrying platform, such that the each connecting piece is stacked on the carrying platform based on the each positioning image quickly and accurately.

### BACKGROUND OF THE INVENTION

A conventional compression molding apparatus is disclosed in TW Publication No. M420424, wherein in operation, plural thermoplastic materials are cut into desired shapes and stacked on a carrying platform, and the carrying platform moves toward below a pressing mold, wherein a driving cylinder drives the pressing mold to move downwardly and to press the plural thermoplastic materials on the carrying platform, and a heater on a top of the pressing mold heats the plural thermoplastic materials, thereby molding the plural thermoplastic materials.

However, it is time-consuming for a worker to feed and stack the plural thermoplastic materials on the carrying platform. Also, the plural thermoplastic materials cannot be fixed on the carrying platform accurately.

The present invention has arisen to mitigate and/or obviate the afore-described disadvantages.

### SUMMARY OF THE INVENTION

The primary objective of the present invention is to provide a compression molding apparatus in which at least one projector projects plural positioning images on a carrying platform so that each positioning image is adapted for fixing each of the plural connecting pieces on a carrying platform, such that the each connecting piece is stacked on the carrying platform based on the each positioning image quickly and accurately.

To obtain the above objective, a compression molding apparatus provided by the present invention contains:
a base including a material feeding zone and a molding zone;
a carrying platform moving into the molding zone from the material feeding zone;
at least one projector fixed above the material feeding zone so as to project plural positioning images on the carrying platform;
a pressing mold arranged above the molding zone; and
a heater mounted on the base so as to heat the each connecting piece on the carrying platform.

When the carrying platform is located in the material feeding zone, plural connecting pieces of different shapes are stacked on the carrying platform in turn.

Each connecting piece is stacked on the carrying platform by aligning with each positioning image.

When the carrying platform moves into the molding zone, the pressing mold moves downwardly to press the each connecting piece on the carrying platform.

### BRIEF DESCRIPTION OF THE DRAWINGS

FIG. 1 is a diagram showing the assembly of a compression molding apparatus according to a first embodiment of the present invention.
FIG 2 is a diagram showing the operation of the compression molding apparatus according to the first embodiment of the present invention.
FIG 3 is another diagram showing the operation of the compression molding apparatus according to the first embodiment of the present invention.
FIG. 4 is also another diagram showing the operation of the compression molding apparatus according to the first embodiment of the present invention.
FIG. 5 is still another diagram showing the operation of the compression molding apparatus according to the first embodiment of the present invention.
FIG. 6 is a diagram showing the assembly of a compression molding apparatus according to a second embodiment of the present invention.
FIG. 7 is a diagram showing the assembly of a compression molding apparatus according to a third embodiment of the present invention.
FIG. 8 is a diagram showing the assembly of a compression molding apparatus according to a fourth embodiment of the present invention.
FIG 9 is a diagram showing the assembly of a compression molding apparatus according to a fifth embodiment of the present invention.

### DETAILED DESCRIPTION OF THE PREFERRED EMBODIMENTS

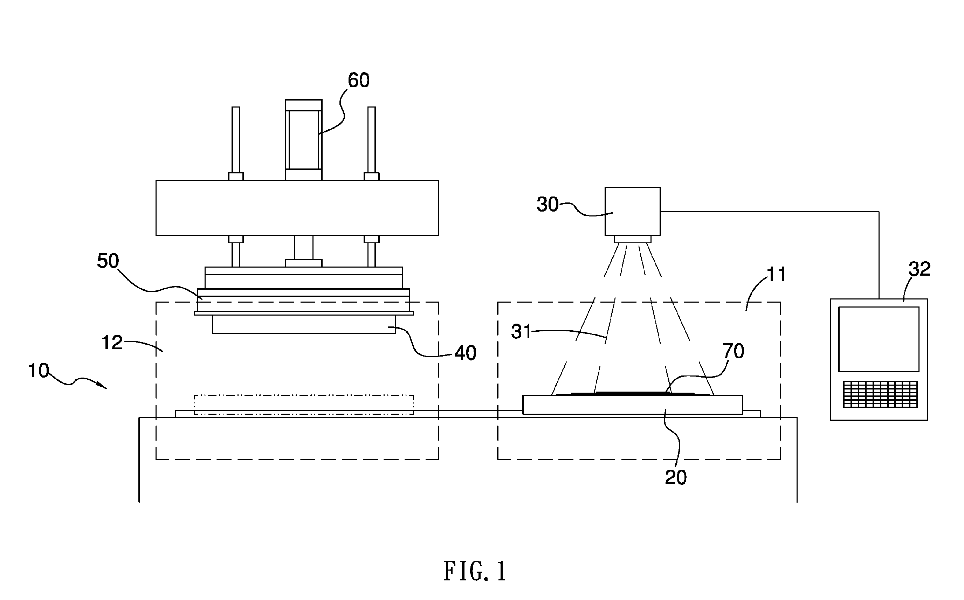

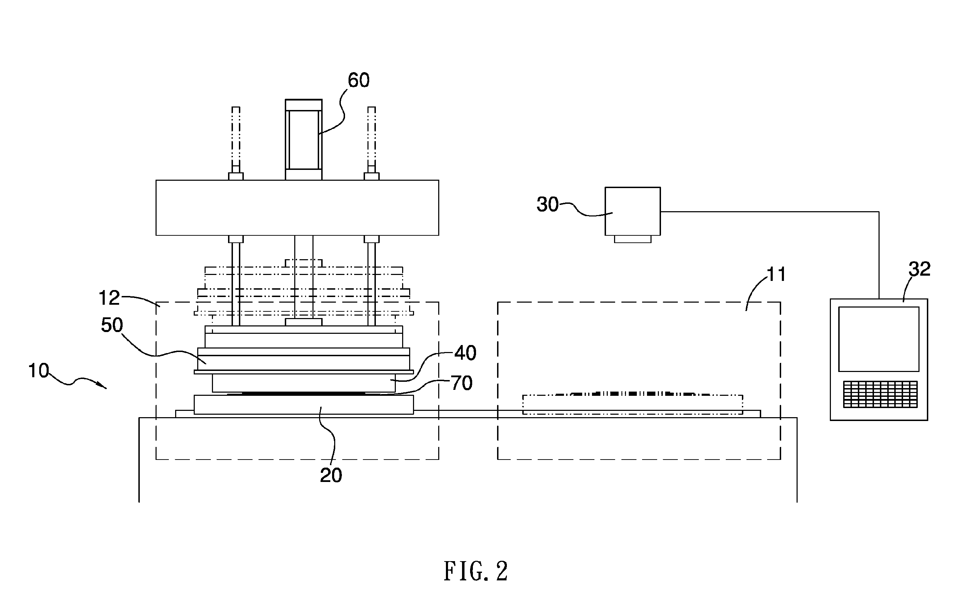

With reference to FIGS. 1 to 2, a compression molding apparatus according to a first embodiment of the present invention comprises: a base 10, a carrying platform 20, a projector 30, a pressing mold 40, a heater 50, and a lifting mechanism 60.

The base 10 includes a material feeding zone 11 and a molding zone 12.

The carrying platform 20 moves into the molding zone 12 from the material feeding zone 11, and when the carrying platform 20 is located in the material feeding zone 11, plural connecting pieces 70 of different shapes are stacked on the carrying platform 20 in turn. In this embodiment, each connecting piece 70 is any one of thermoplastic material, cloth, leather, and a combination of the thermoplastic material, the cloth, and the leather. The carrying platform 20 includes three-dimensional patterns formed thereon, and the thermoplastic material has a temperature resistant layer formed on a first surface thereof and has a low temperature layer formed on a second surface thereof, wherein the temperature resistant layer is made of a mixture of thermoplastic polymeric material and colorant by using an extruder, and the thermoplastic polymeric material is selected from a group consisting of thermoplastic polyurethane (TPU) + styrene butadiene rubber (SBR), thermoplastic polyurethane (TPU) + (styrene ethylene butylene styrene (SEBS), thermoplastic polyurethane (TPU) + (thermoplastic rubber (TPR), thermoplastic polyurethane (TPU) + ethylene propylene diene monomer (EPDM), thermoplastic polyurethane (TPU) + thermoplastic polyurethane (TPU) hot melt adhesives, and thermoplastic polyurethane (TPU) + nylon elastomer. Preferably, a color is printed, coated or surface sandwiched on the temperature resistant layer. The leather is any one of artificial leather (such as PU, TPU, TPO or TPE leather), natural leather (such as cattle leather, sheep leather or swine leather) and synthetic leather (i.e., a combination of natural lather and artificial leather).

The projector 30 is fixed above the material feeding zone 11 so as to project plural positioning images 31 on the carrying platform 20, wherein the each connecting piece 70 is stacked on the carrying platform 20 by aligning with the each positioning image 31. In this embodiment, the projector 30 is electrically connected with a controller 32 (such as a control center, a console, or a computer), wherein the controller 32 inputs the positioning image 31 projected by the projector 30 and sets a playing time and a display sequence of the each positioning image 31, and the each positioning image 31 is a pattern or a reference location of the each connecting piece 70 on the carrying platform 20.

The pressing mold 40 is arranged above the molding zone 12, when the carrying platform 20 moves into the molding zone 12, the pressing mold 40 moves downwardly to press the each connecting piece 70 on the carrying platform 20. In this embodiment, the pressing mold 40 includes three-three-dimensional patterns formed on a bottom thereof.

The heater 50 is mounted on a top of the pressing mold 40, wherein when the pressing mold 40 presses the each connecting piece 70 on the carrying platform 20, the heater 50 heats the each connecting piece 70. Alternatively, the heater 50 can be mounted on a bottom of the carrying platform 20.

The lifting mechanism 60 is secured above the molding zone 12 so as to drive the pressing mold 40 to move upwardly or downwardly, such that the pressing mold 40 moves onto or away from the carrying platform 20.

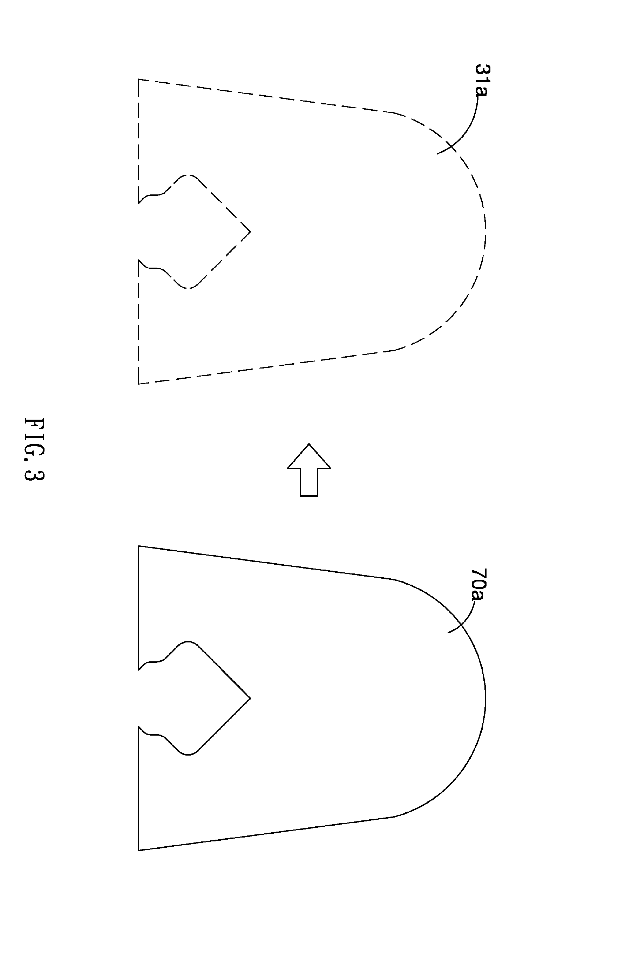

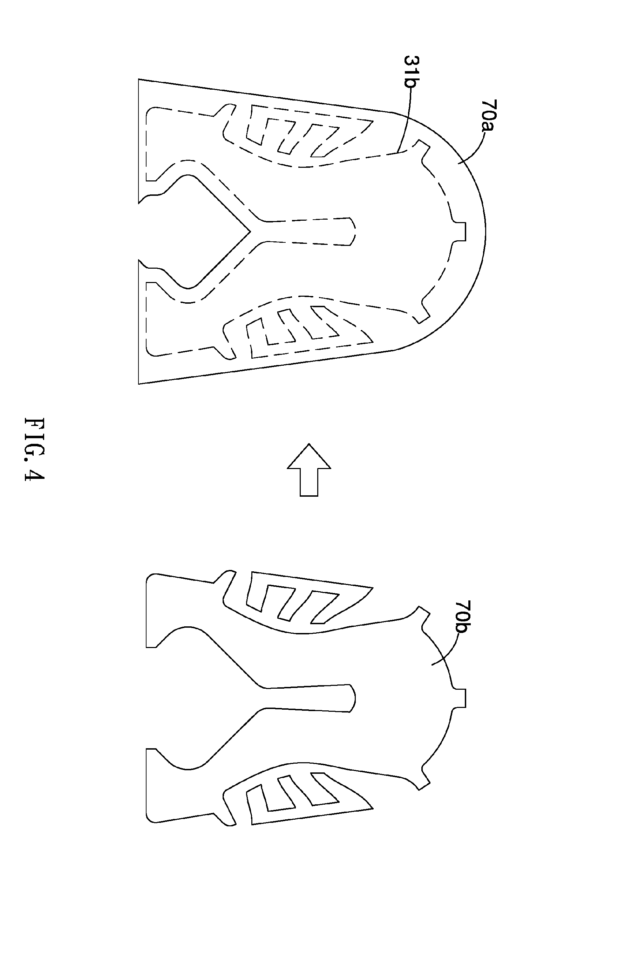

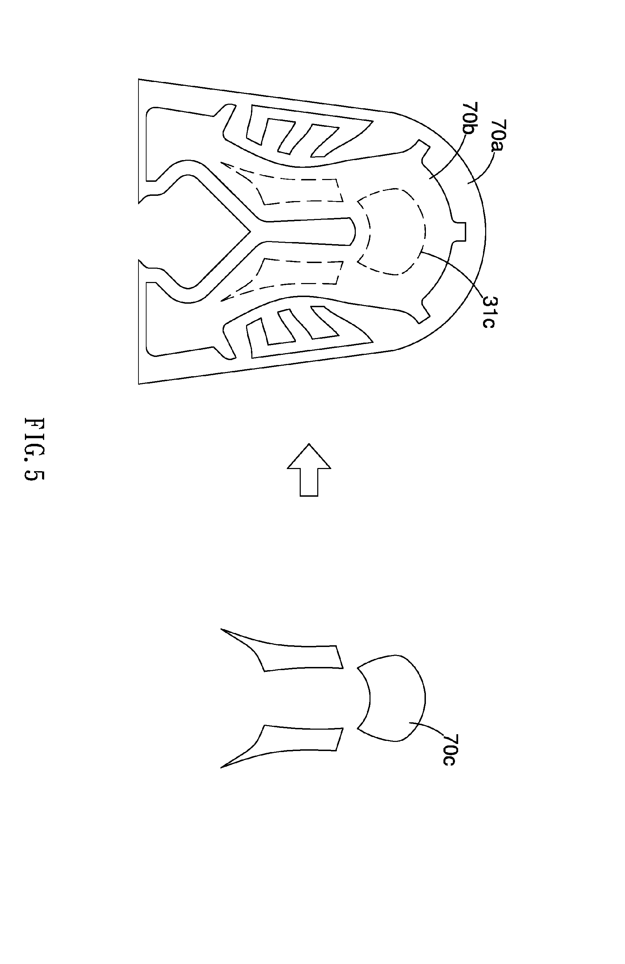

Referring further to FIGS. 3 to 5, a first connecting piece 70a, a second connecting piece 70b, and a third connecting piece 70c are stacked, pressed, and heated on the carrying platform 20. However, a number of the plurality of connecting pieces 70 is any one of two, three, four, and more than four. In operation, the projector 30 projects a first positioning image 31a on the carrying platform 20, and the first positioning image 31a is a pattern of the first connecting piece 70a, hence the first connecting piece 70a is aligned with the first positioning image 31a, thus positioning the first connecting piece 70a on the carrying platform 20. The projector 30 projects a second positioning image 31b on the first connecting piece 70a on the carrying platform 20, and the second positioning image 31b is a pattern of the second connecting piece 70b, hence the second connecting piece 70b is aligned with the second positioning image 31b, thus positioning the second connecting piece 70b on the first connecting piece 70a. Thereafter, the projector 30 projects a third positioning image 31c on the second connecting piece 70b on the first connecting piece 70a, and the third positioning image 31c is a pattern of the third connecting piece 70c, hence the third connecting piece 70c is aligned with the third positioning image 31c, thus positioning the third connecting piece 70c on the second connecting piece 70b.

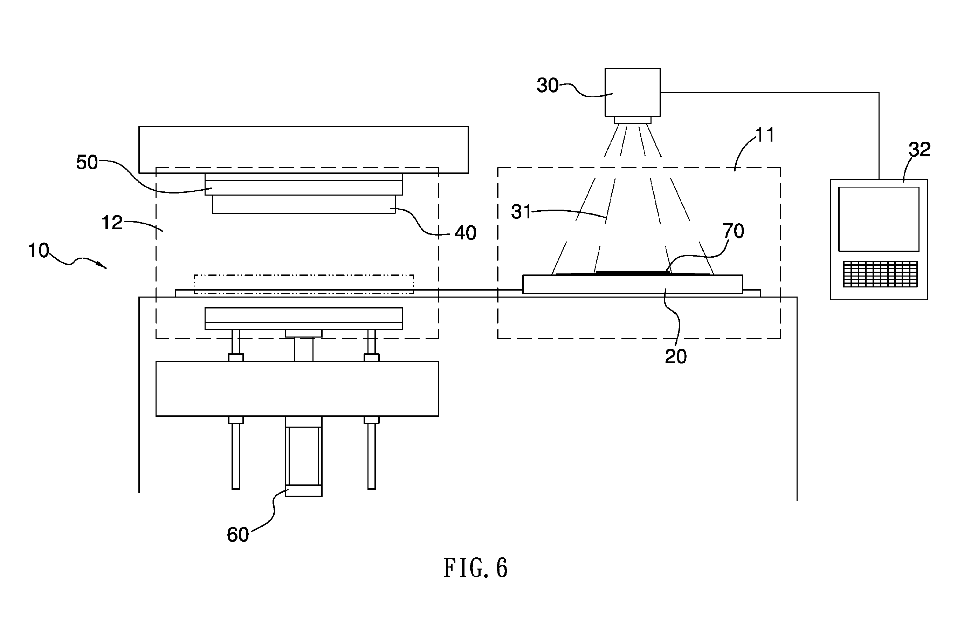

As shown in FIG. 6, a compression molding apparatus of a second embodiment from that of the first embodiment comprises: a lifting mechanism 60 secured below the molding zone 12 so as to drive the carrying platform 20 to move upwardly or downwardly, such that carrying platform 20 moves onto or away from the pressing mold 40.

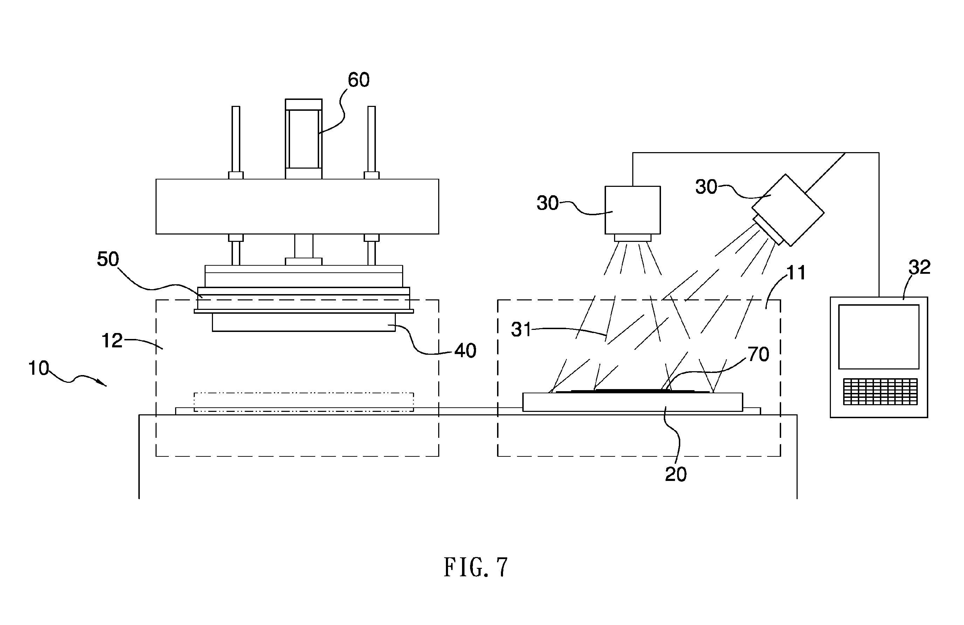

As illustrated in FIG. 7, a compression molding apparatus of a third embodiment from that of the first embodiment comprises: a plurality of projectors 11 fixed above the material feeding zone 11.

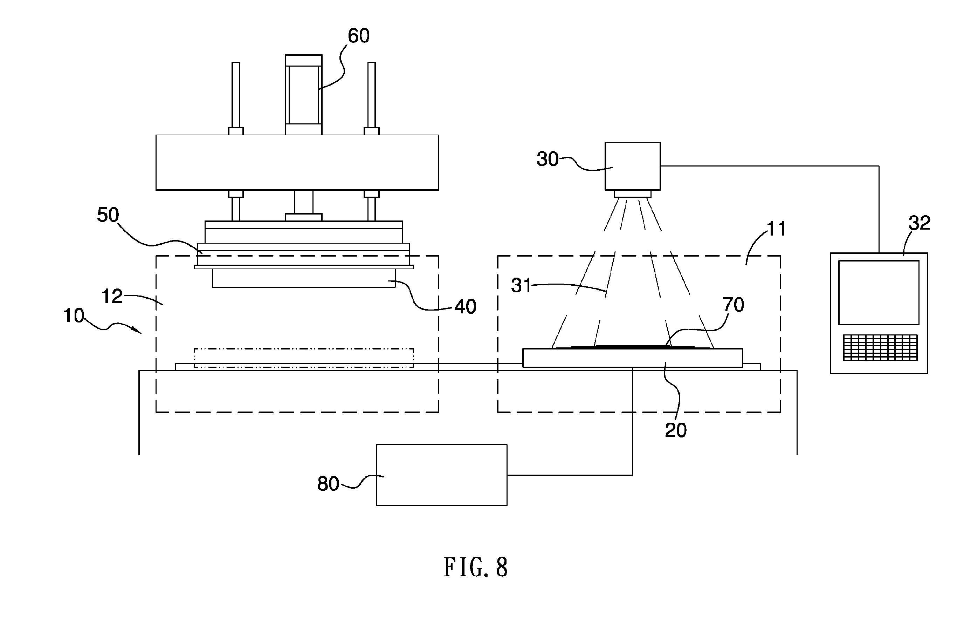

With reference to FIG. 8, a compression molding apparatus of a fourth embodiment from that of the first embodiment comprises: a vacuuming device 80 connected with the carrying platform 20, wherein the vacuuming device 80 sucks the plurality of connecting pieces 70 on the carrying platform 20.

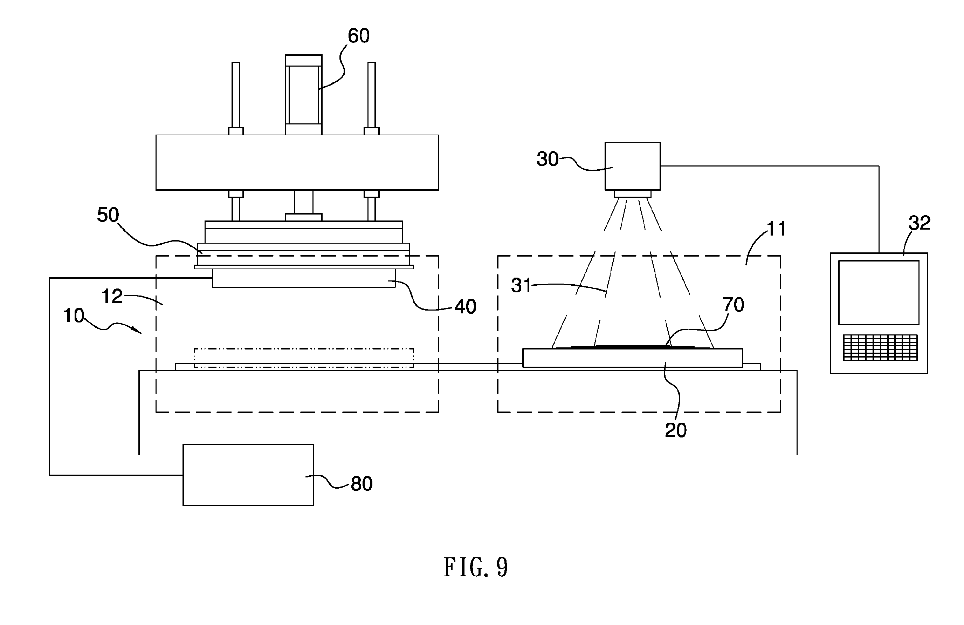

Referring to FIG. 9, a compression molding apparatus of a fifth embodiment from that of the first embodiment comprises: a vacuuming device 80 connected with the pressing mold 40, wherein the pressing mold 40 sucks the plurality of connecting pieces 70 on the carrying platform 20 by using the vacuuming device 80.

Thereby, the projector or the plurality of projectors 30 project the plural positioning images 31 on the carrying platform 20 so that the each positioning image 31 is adapted for fixing the each connecting piece 70 on the carrying platform 20, such that the each connecting piece 70 is stacked on the carrying platform 20 based on the each positioning image 31 quickly and accurately.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A compression molding apparatus comprising:
a base (10) including a material feeding zone (11) and a molding zone (12);
a carrying platform (20) moving into the molding zone (12) from the material feeding zone (11);
at least one projector (30) fixed above the material feeding zone (11) so as to project plural positioning images (31) on the carrying platform (20);
a pressing mold (40) arranged above the molding zone (12); and
a heater (50) mounted on the base (10) so as to heat the each connecting piece (70) on the carrying platform (20);
**characterized in that**:
when the carrying platform (20) is located in the material feeding zone (11), plural connecting pieces (70) of different shapes are stacked on the carrying platform (20) in turn;
each connecting piece (70) is stacked on the carrying platform (20) by aligning with each positioning image (31); and
when the carrying platform (20) moves into the molding zone (12), the pressing mold (40) moves downwardly to press the each connecting piece (70) on the carrying platform (20).

2. The compression molding apparatus as claimed in claim 1, **characterized in that** the at least one projector (30) is electrically connected with a controller (32), and the controller (32) inputs the each positioning image (31) projected by the at least one projector (30) and sets a playing time and a display sequence of the each positioning image (31).

3. The compression molding apparatus as claimed in claim 2, **characterized in that** the each positioning image (31) is a pattern or a reference location of the each connecting piece (70) on the carrying platform (20).

4. The compression molding apparatus as claimed in claim 1, **characterized in that** a plurality of projectors (30) are fixed above the material feeding zone (11).

5. The compression molding apparatus as claimed in claim 1 further comprising a lifting mechanism (60) secured above the molding zone (12) so as to drive the pressing mold (40) to move upwardly or downwardly, such that the pressing mold (40) moves onto or away from the carrying platform (20).

6. The compression molding apparatus as claimed in claim 1 further comprising a lifting mechanism (60) secured below the molding zone (12) so as to drive the carrying platform (20) to move upwardly or downwardly, such that carrying platform (20) moves onto or away from the pressing mold (40).

7. The compression molding apparatus as claimed in claim 1 further comprising a vacuuming device (80) connected with the carrying platform (20), **characterized in that** the vacuuming device (80) sucks the plurality of connecting pieces (70) on the carrying platform (20).

8. The compression molding apparatus as claimed in claim 1 further comprising a vacuuming device (80) connected with the pressing mold (40), **characterized in that** the pressing mold (40) sucks the plurality of connecting pieces (70) on the carrying platform (20) by using the vacuuming device (80).

9. The compression molding apparatus as claimed in claim 1, **characterized in that** the carrying platform (20) includes three-dimensional patterns formed thereon.

10. The compression molding apparatus as claimed in claim 1, **characterized in that** the pressing mold (40) includes three-three-dimensional patterns formed on a bottom thereof.
